# DEMANDE DE BREVET EUROPEEN

(11) **EP 0 533 524 A1**
(43) Date de publication de la demande: **24.03.1993**
(21) Numéro de dépôt: 92402423.5
(22) Date de dépôt: 04.09.1992
(51) Int. Cl.: B29C 53/04, B29C 53/08, B29K 105/10

(54) **Procédé pour le cintrage dans un plan d'un profilé en matériau composite constitué de fibres longues dans une matrice thermoplastique**

(30) Priorité: 17.09.1991 FR 9111426
(71) Demandeur: GEC ALSTHOM ACB, F-75116 PARIS (FR)
(72) Inventeur: Blot, Philippe, F-44000 Nantes (FR)
(74) Mandataire: Gosse, Michel

(57) **Abrégé**

Procédé pour le cintrage dans un plan d'un profilé (7) en matériau composite constitué de fibres longues dans une matrice thermoplastique, caractérisé par le fait que le profilé est chauffé sur toute sa longueur à la température de ramollissement de la matrice puis par le fait que le cintrage est obtenu par le moyen d'une bande (8) que l'on vient appliquer fortement, en la tirant à chacune de ses extrémités, contre le profilé disposé contre une forme (6) présentant une courbure correspondant au cintrage souhaité, l'étirement de la bande se faisant en enveloppant ladite forme, le profilé étant ensuite refroidi jusqu'à la température de durcissement de la matrice en maintenant la tension dans ladite bande (8).

## Description

La présente invention concerne un procédé pour le cintrage dans un plan d'un profilé en matériau composite constitué de fibres longues dans une matrice thermoplastique.

Les fibres ont une longueur importante par comparaison aux fibres utilisées dans les matériaux du type "Compound" et sont disposées les unes à côté des autres sur plusieurs couches, l'ensemble est englobé dans la matrice qui est une résine thermoplastique telle qu'un polymère connu sous le nom de PEI, PES, PPS ou PEEK.

Les fibres utilisées sont des fibres quasiment inextensibles ce qui crée des difficultés pour le formage du matériau, bien que la matrice soit elle thermoplastique. Par exemple, il n'est pas possible de cintrer de tels profilés en les étirant simplement sur une machine à cintrer par étirage, comme on le fait pour des profilés métalliques.

En effet si les fibres font toute la longueur du profilé un tel étirage casserait tout simplement les fibres ; en outre comme la matrice est thermoplastique, il est nécessaire, pour permettre sa déformation de l'amener à une température critique permettant une telle déformation mais, indépendamment du fait de la présence des fibres qui rend l'opération d'étirage impossible, pour assurer une bonne qualité mécanique à la matrice, la déformation de la matrice à chaud et ensuite son refroidissement doivent être effectués sous pression. De plus le ramollissement de la matrice ne permettrait pas une préhension suffisante du profilé dans les mors de la machine.

Ainsi, pour ces deux raisons : la présence des fibres et la nécessité d'une pression sur le matériau thermoplastique de la matrice, on ne peut pas effectuer le cintrage de tels profilés par simple étirage sur une machine à cintrer par étirage.

Le document EP-1-0141604 décrit un procédé pour le formage de matériaux composites thermoplastiques renforcés de fibres. Dans ce procédé, on utilise une forme contre laquelle on vient appliquer à chaud une plaque de matériau composite thermoplastique par le moyen de rouleaux presseurs. Pour un meilleur état de surface, il est prévu d'intercaller une feuille d'aluminium entre les rouleaux et la plaque à former. Un tel procédé n'assure pas le formage sous pression du matériau à former ce qui est pourtant nécessaire pour lui assurer une bonne compacité sans défauts internes.

La présente invention a pour but de proposer un procédé permettant de cintrer dans un plan de tels profilés.

L'invention a ainsi pour objet un procédé pour le cintrage dans un plan d'un profilé en matériau composite constitué de fibres longues dans une matrice thermoplastique, caractérisé par le fait que le profilé est chauffé sur toute sa longueur à la température de ramollissement de la matrice puis par le fait que le cintrage est obtenu par le moyen d'une bande que l'on vient appliquer fortement, en la tirant à chacune de ses extrémités, contre le profilé disposé contre une forme présentant une courbure correspondant au cintrage souhaité, l'étirement de la bande se faisant en enveloppant ladite forme, le profilé étant ensuite refroidi jusqu'à la température de durcissement de la matrice en maintenant la tension dans ladite bande.

Ainsi, grâce au procédé, les différentes couches de fibres, peuvent glisser les unes par rapport aux autres dans la matrice puisque d'une part le profilé n'est pas tenu par ses extrémités et d'autre part, le profilé est chauffé sur toute sa longueur et non pas seulement dans sa portion à cintrer.

Outre son rôle d'assurer la déformation du profilé de façon à lui faire épouser la courbure de la forme, la bande assure également la pression nécessaire à une bonne compaction de la matrice.

La bande utilisée est par exemple une bande métallique.

Le profilé peut être un simple plat il peut aussi avoir la forme d'une cornière ou encore avoir une section en forme de U. Autrement dit sa section peut ne comporter qu'un seul côté ou bien comporter un premier côté et au moins une aile perpendiculaire à ce premier côté.

Dans le cas où la section du profilé comporte, outre un premier côté, au moins une aile perpendiculaire, la concavité du cintrage, et donc la forme, est située par rapport au premier côté, du même côté que l'aile perpendiculaire.

En effet, compte tenu de la présence des fibres, de longueur quasiment invariable, dans la matrice du profilé, il n'est pas possible d'effectuer un cintrage, tout au moins quand l'angle de cintrage n'est pas faible, dans un sens où l'aile s'allongerait car alors, les fibres ne feraient pas toute la longueur du profilé, seule la matrice s'allongerait, les fibres, de longueur quasiment invariable glissant dans la matrice ramollie.

Quand le profilé est constitué de fibres principalement orientées dans le sens du profilé, sans toutefois faire la longueur de celui-ci, la variation de longueur du matériau composite est possible, mais elle reste réduite car au-delà d'une certaine valeur il y a risque d'apparition de défauts internes (porosité, micro ruptures) et de variations géométriques préjudiciables à la santé mécanique du profilé.

Ainsi, la concavité étant située du côté de l'aile, celle-ci a tendance à se raccourcir. On peut procéder alors de la façon suivante :
Le cintrage est effectué, comme dit précédemment, par la bande que l'on applique contre ledit premier côté et une fois que ce premier côté est bien appliqué par la bande contre la forme, on vient exercer contre l'aile une pression de manière à la comprimer contre une face de la forme sensiblement parallèle au plan de cintrage.

Cette pression peut être exercée soit par le moyen d'une membrane mise sous pression soit par l'intermédiaire d'une plaque en élastomère.

La face de la forme contre laquelle l'aile est comprimée peut être soit plane soit de préférence ondulée de manière à permettre aux fibres, dont la longueur est quasi invariable de rester bien allongées sans former de plis par exemple du type flamblement local qui seraient préjudiciable à la santé du matériau.

On maintien donc la longueur développée de l'aile en lui faisant subir des ondulations. La face de la forme, parallèle au plan de cintrage, contre laquelle on vient comprimer l'aile comporte donc une ou plusieurs ondulations, selon la longueur à rattraper, dont l'importance croit depuis l'arête de la forme où l'ondulation est nulle jusqu'à une distance de cette arête, correspondant à la largeur de l'aile, où l'ondulation est maximale.

De cette façon, les fibres restent bien rangées et allongées sans replis sur elles-mêmes et le profilé reste bien homogène.

La bande métallique ainsi que la forme sont chauffants jusqu'à la température de ramollissement de la matrice.

La bande métallique peut être chauffée par effet joule à partir d'une alimentation électrique placée à ses extrémités. On peut également envisager un chauffage initial par contact ou panneaux radiants.

La forme doit également être refroidi jusqu'à une température inférieure à la température de durcissement de la matrice.

On va maintenant illustrer, le procédé de l'invention, en se référant au dessin annexé dans lequel :
- La figure 1 est une vue schématique générale illustrant l'utilisation d'une machine à cintrer, par étirage, les profilés métalliques, pour le procédé, selon l'invention, de cintrage d'un profilé en matériau composite.
- La figure 2 est une vue schématique agrandie d'une partie de la figure 1.
- La figure 3 est une vue schématique qui illustre, selon un premier mode de réalisation du procédé, et vu en coupe partielle schématique selon la ligne A-A de la figure 1, le moyen utilisé pour comprimer une aile du profilé du type cornière.
- La figure 4 est une variante de la figure 3.

Dans l'exemple illustré, le procédé est appliqué au cintrage d'un profilé en matériau composite tel que défini ci-dessus, dont la section est en forme de cornière.

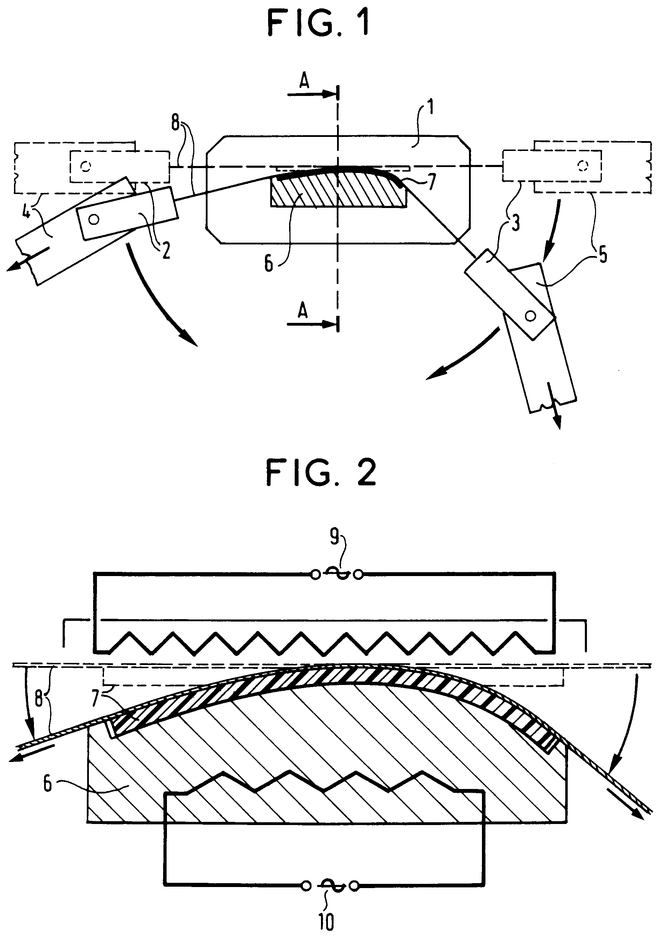

Pour la mise en oeuvre du procédé, on peut utiliser une machine à cintrer, par étirage, les profilés métalliques. C'est ce que montre la figure 1 où l'on voit une table 1 et de part et d'autre les mors 2, 3 articulés aux bras 4, 5. Sur la table 1 est disposé une forme 6 dont la courbure correspond au cintrage que l'on souhaite donner au profilé en matériau composite 7 qui est déformé par l'action d'une bande métallique 8 prise à ses extrémités dans les mors 2, 3 de la machine et que l'on vient appliquer fortement contre la forme 6.

La figure 2 est une vue schématique agrandie partielle de la figure 1, dans laquelle on montre le chauffage du profilé 7 par la bande métallique 8 ainsi que par la forme 6. Pour cela, ces deux organes peuvent être chauffés par effet joule à partir d'une alimentation électrique 9, 10.

Une fois le profilé 7 mis en place entre la forme 6 et la bande métallique 8, on procède au chauffage du profilé jusqu'à la température de ramollissement du profilé permettant le glissement des différentes couches de fibres dans la matrice, sans toutefois atteindre une température provoquant la fusion totale de la matrice. On procède ensuite au cintrage à l'aide de la bande métallique 8 que l'on tire en l'appliquant fortement contre la forme 6 en l'enveloppant. On procède ensuite au refroidissement du profilé jusqu'à une température assurant le durcissement de la matrice, ceci par conduction thermique à l'aide de la forme en maintenant la pression du profilé contre la forme par l'action de la bande 8 dont la tension est maintenue. A cet effet, la forme 6 assure ce refroidissement, par exemple par le moyen d'un fluide caloporteur circulant dans des canaux aménagés dans la forme.

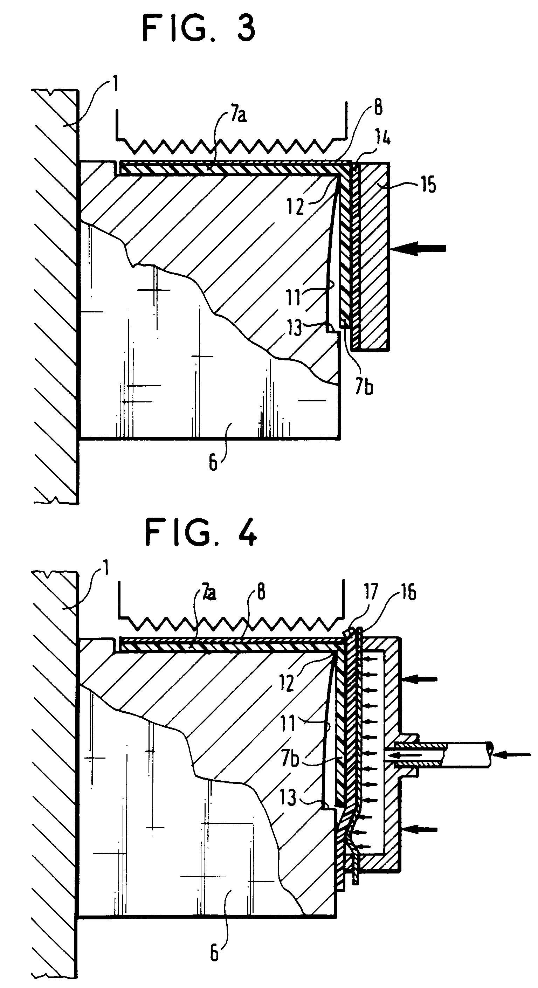

Les figures 3 et 4 illustrent le moyen utilisé pour assurer la compression de l'aile du profilé lorsque celui-ci en comporte une, comme c'est le cas dans l'exemple décrit.

Sur la figure 3, on voit la table 1, la forme 6, la bande métallique 8 qui vient appliquer le premier côté 7a du profilé 7 contre la courbure de la forme 6.

Afin de permettre aux fibres de longueur invariables, de l'aile 7b du profilé 7 de rester étendues dans la matrice sans former de replis, compte tenu du cintrage dans un sens où la longueur de l'aile subit normalement un rétrécissement, on évite ce rétrécissement en comprimant l'aile contre une surface ondulée 11 de la forme 6. On conserve ainsi la même longueur réelle de l'aile tout en diminuant sa longueur apparente, l'aile faisant des ondulations de part et d'autre du plan perpendiculaire au premier côté 7a.

Comme le montre la figure, l'ondulation est nulle à l'angle 12 et maximale à l'extrémité libre 13 de l'aile 7b.

Il est bien clair que compte tenu de la longueur à rattraper on peut soit réaliser une ondulation complète dont l'amplitude dépend de la longueur à rattraper mais on peut également n'effectuer qu'une portion d'ondulation.

De cette façon, les nappes de fibres restent bien alignées et allongées sans replis sur elles-mêmes. Sur la figure 3, la pression est exercée par un coussin en élastomère 14 fixé contre un matériau rigide 15.

Sur la figure 4, la pression est exercée par l'intermédiaire d'une membrane 16 mise sous pression, avec interposition d'un matelas en élastomère 17.

## Revendications

**1/** Procédé pour le cintrage dans un plan d'un profilé (7) en matériau composite constitué de fibres longues dans une matrice thermoplastique, caractérisé par le fait que le profilé est chauffé sur toute sa longueur à la température de ramollissement de la matrice puis par le fait que le cintrage est obtenu par le moyen d'une bande (8) que l'on vient appliquer fortement, en la tirant à chacune de ses extrémités, contre le profilé disposé contre une forme (6) présentant une courbure correspondant au cintrage souhaité, l'étirement de la bande se faisant en enveloppant ladite forme, le profilé étant ensuite refroidi jusqu'à la température de durcissement de la matrice en maintenant la tension dans ladite bande (8).

**2/** Procédé selon la revendication 1, dans lequel la section dudit profilé (7) comprend un premier côté (7a) et au moins une aile (7b) perpendiculaire à ce premier côté, caractérisé par le fait que la concavité du cintrage et donc ladite forme est située, par rapport audit premier côté, du même côté que ladite aile perpendiculaire, le cintrage étant effectué, par ladite bande (8) s'appliquant contre ledit premier côté (7a), et en ce que, une fois que ledit premier côté est bien appliqué par ladite bande (8) contre ladite forme, on vient exercer contre ladite aile (7b) une pression de manière à la comprimer contre une face de ladite forme sensiblement parallèle au plan de cintrage.

**3/** Procédé selon la revendication 2, caractérisé par le fait que ladite face parallèle au plan de cintrage, de ladite forme n'est pas plane mais est ondulée, l'ondulation (11) s'accentuant depuis le bord (12) de la forme, correspondant à l'angle du premier côté (7a) avec ladite aile du profilé, où l'ondulation est nulle jusqu'à la distance correspondant à l'extrémité libre de l'aile (7b), où l'ondulation est maximale de façon à ce que les fibres dont la longueur est invariable, restent bien allongées et rangées en formant une légère ondulation, sans former de replis sur elles-mêmes, compte tenu du rétrécissement en longueur de l'aile dû au cintrage avec la concavité située du côté de l'aile.

**4/** Procédé selon l'une des revendications 1 ou 3, caractérisé par le fait que ladite pression contre ladite aile est exercée par le moyen d'une membrane (16) mise sous pression.

**5/** Procédé selon l'une des revendications 2 ou 3, caractérisé par le fait que ladite pression contre ladite aile est exercée par l'intermédiaire d'une plaque en élastomère (14).

**6/** Procédé selon l'une des revendications 1 à 5, caractérisé par le fait que ladite bande (8) est une bande métallique.
